# EUROPÄISCHE PATENTANMELDUNG

(11) **EP 2 474 797 A1**
(43) Veröffentlichungstag der Anmeldung: **11.07.2012**
(21) Anmeldenummer: 12000075.7
(22) Anmeldetag: 09.01.2012
(51) Int. Cl.: F25B 19/00, F25B 27/02, F25B 9/14, F25D 3/10

(54) **Verfahren und Vorrichtung zur Gebäudeklimatisierung**

(30) Priorität: 11.01.2011 DE 102011008278
(71) Anmelder: Rießner, Thilo, 96215 Lichtenfels (DE)
(72) Erfinder: Rießner, Thilo, 96215 Lichtenfels (DE)
(74) Vertreter: FDST Patentanwälte

(57) **Zusammenfassung**

Es werden ein energiesparendes und umweltschonendes Verfahren zur Gebäudeklimatisierung sowie eine zugehörige Vorrichtung (1) angegeben. Verfahrensgemäß wird ein kaltverflüssigtes Industriegas (G) verdampft und/oder erwärmt, wobei die bei der Erwärmung bzw. Verdampfung entstehende Kälte mittelbar oder unmittelbar zur Innenraumkühlung eines Gebäudes genutzt wird. Die zur Verfahrensdurchführung vorgesehene Vorrichtung (1) umfasst insbesondere einen ersten Wärmetauscher (6) zur Erwärmung- bzw. Verdampfung des kaltverflüssigten Industriegases (G) durch thermische Wechselwirkung mit einem Kältemedium (M1), wobei dieser Wärmetauscher (6) einerseits in eine das Industriegas (G) führende Gasleitung (2) und andererseits in einen das Kältemedium (M1) führenden Primärkreislauf (11) geschaltet ist, wobei der Primärkreislauf (11) den Wärmetauscher (6) kälteübertragungstechnisch mit Mitteln (12,17) zur Innenraumkühlung eines Gebäudes verbindet.

## Beschreibung

Die Erfindung bezieht sich auf ein Verfahren zur Gebäudeklimatisierung sowie auf eine zugehörige Vorrichtung.

Zur Klimatisierung, d.h. Kühlung von Gebäudeinnenräumen werden derzeit überwiegend Klimaanlagen eingesetzt, die die Außenluft als "Kältequelle" nutzen, die also die dem Gebäudeinnenraum entzogene Wärme mittels eines thermodynamischen Kreislaufprozesses nach Art eines Kühlschranks an die Außenluft abgeben. Bedingt durch die teils vergleichsweise hohen Temperaturunterschiede zwischen Innen- und Außenluft benötigen die zur Gebäudeklimatisierung eingesetzten Klimaanlagen, insbesondere in der heißen Jahreszeit einen erheblichen Energieverbrauch. Zudem heizen Klimaanlagen die Außenluft lokal zusätzlich auf, was im Einzelfall negative Auswirkungen haben kann, insbesondere zu lokalen (Mikro-) Klimaänderungen führen kann.

In der Medizin sowie in vielen industriellen Prozessen, beispielsweise in der Nahrungsmittelindustrie, der chemischen Industrie sowie metallerzeugenden und metallverarbeitenden Industrie, werden andererseits große Mengen an sogenannten Industriegasen benötigt. Als Industriegas wird hierbei ein chemischer Reinstoff oder ein Stoffgemisch bestimmter chemischer Zusammensetzung verstanden, der bzw. das unter gewöhnlichen atmosphärischen Temperatur- und Druckbedingungen in gasförmiger Form vorliegt. Beispiele für in großer Menge verwendete Industriegase sind insbesondere Stickstoff (N₂), Sauerstoff (O₂), Argon (Ar) sowie Kohlendioxid (CO₂).

Aus Gründen des wesentlich kleineren Volumens und leichteren Handhabung werden solche Industriegase in der Regel in kaltverflüssigter Form transportiert und gelagert. Hierbei wird das Industriegas oder ein dieses enthaltene Gasgemisch, insbesondere Luft, durch einen sogenannten Verflüssiger unter dessen Siedetemperatur abgekühlt und durch Kondensation in die flüssige Phase überführt. Der Begriff "Industriegas" wird in diesem Sinne nachfolgend auch für die flüssige Phase eines solchen Gases verwendet.

Für die meisten Anwendungen werden Industriegase in gasförmigem Zustand benötigt. Die in kaltverflüssigter Form gelagerten Industriegase müssen daher vor ihrer Verwendung verdampft werden. Dies geschieht in der Regel in Außenluftwärmetauschern unter thermischer Wechselwirkung mit der Außenluft. Die bei dieser Verdampfung entstehende Kälte wird hierbei ungenutzt an die Umgebung abgegeben, was zu einer lokalen Unterkühlung führen kann.

In Kliniken und industriellen Anlagen kommt es hierbei öfters, gerade in den Sommermonaten, zu dem Effekt, dass einerseits aufgrund der Industriegasverdampfung große Mengen an Kälte ungenutzt an die Umgebung abgegeben werden, dass aber an anderer Stelle durch die Gebäudeklimatisierung große Mengen an zusätzlicher Wärme an die Umgebung abgegeben werden, so dass es sowohl zu örtlichen Unterkühlungen als auch zu örtlichen Überhitzungen der Umgebung kommt.

Der Erfindung liegt die Aufgabe zugrunde, ein energieeffizientes und umweltschonendes Verfahren zur Gebäudeklimatisierung, insbesondere für den industriellen Bereich anzugeben. Der Erfindung liegt weiterhin die Aufgabe zugrunde, eine zur Durchführung des Verfahrens besonders geeignete Vorrichtung anzugeben.

Bezüglich des Verfahrens wird diese Aufgabe erfindungsgemäß gelöst durch die Merkmale des Anspruchs 1. Bezüglich der zugehörigen Vorrichtung wird diese Aufgabe erfindungsgemäß gelöst durch die Merkmale des Anspruchs 6. Vorteilhafte Ausgestaltungen und Weiterentwicklungen der Erfindung sind in den Unteransprüchen und der nachfolgenden Beschreibung dargelegt.

Nach dem erfindungsgemäßen Verfahren wird ein kaltverflüssigtes Industriegas, insbesondere Stickstoff, Sauerstoff oder Argon verdampft und/oder erwärmt, wobei die bei dieser Verdampfung entstehende Kälte zur Innenraumkühlung eines Gebäudes genutzt wird. Als "Kälte" wird hierbei allgemein entzogene Wärmeenergie bezeichnet. Diese Kälte kann unmittelbar zur Innenraumkühlung eingesetzt werden, z. B. in dem ein zur Verdampfung des Industriegases dienender Wärmetauscher, insbesondere in Form eines flächigen Kühlkörpers unmittelbar in dem oder jeden zu kühlenden Innenraum angeordnet wird. Vorzugsweise wird die bei der Verdampfung des Industriegases entstehende Kälte aber mittelbar zur Innenraumkühlung eingesetzt, in dem diese Kälte zunächst zumindest teilweise auf ein Kälte(übertragungs)medium übertragen wird, und indem dieses Kältemedium dann zur Innenraumkühlung eingesetzt wird. Als Kältemedium wird hierbei vorzugsweise Sole eingesetzt, d.h. eine wässrige Salzlösung mit einem gegenüber 0°C deutlich erniedrigten Gefrierpunkt.

In bevorzugter Ausführung der Erfindung wird das verflüssigte Industriegas zur Verdampfung in einem ersten Wärmetauscher mit dem Kältemedium in thermische Wechselwirkung gebracht. Dieser erste Wärmetauscher ist hierzu einerseits in eine Gasleitung geschaltet, die das verflüssigte Industriegas zuführt, und zumindest teilverdampftes Industriegas abführt. Andererseits ist der Wärmetauscher in einen Primärkreislauf eingebunden, der vergleichsweise warmes Kältemedium zuführt, und kaltes Kältemedium abführt.

Das in dem ersten Primärkreislauf zirkulierende Kältemedium kann im Rahmen der Erfindung wiederum unmittelbar zur Innenraumkühlung eingesetzt werden, insbesondere indem es unmittelbar durch entsprechende Kühlkörper in dem oder jedem zu kühlenden Innenraum geleitet wird.

In bevorzugter Ausführung der Erfindung wird aber auch das in dem Primärkreislauf zirkulierende Kältemedium wiederum mittelbar zur Innenraumkühlung eingesetzt, in dem es die gespeicherte Kälte an weitere, in den Primärkreislauf geschaltete Mittel zur Innenraumkühlung abgibt. Bei diesen Mitteln zur Innenraumkühlung handelt es sich im einfachsten Fall um einen oder mehrere Luftwärmetauscher, in dem oder denen das in dem Primärkreislauf zirkulierende Kältemittel Kälte an einen Zuluftstrom für den oder jeden zu kühlenden Innenraum abgibt.

Wiederum zusätzlich oder alternativ ist in zweckmäßiger Ausführung der Erfindung als weiteres Mittel zur Innenraumkühlung ein Kältespeicher vorgesehen. In einer besonders bevorzugten Ausführung der Erfindung ist nur dieser Kältespeicher unmittelbar in den Primärkreislauf eingebunden, um die bei der Verdampfung des Industriegases entstehende Kälte zwischenzuspeichern und für eine bedarfsgerechte Entnahme zu puffern. Der Kältespeicher steht hierbei zweckmäßigerweise über einen Sekundärkreislauf, der wiederum ein Kälte(übertragungs)medium führt, mit einem oder mehreren Luftwärmetauschem und/oder anderen Mitteln zur Innenraumkühlung in wärmeübertragungstechnischer Verbindung.

Bei dem Kältespeicher handelt es sich insbesondere um einen Eisspeicher. Die Verwendung eines solchen Eisspeichers hat insbesondere den Vorteil, dass die durch die Verdampfung des Industriegases gewonnene Kälte bei - im Vergleich zu den Siedetemperaturen der häufig verwendeten Industriegase - hoher Temperatur von 0°C einfach und effizient gespeichert werden kann.

Als Kältemedium für den Sekundärkreislauf wird vorzugsweise wiederum Sole verwendet. Bei dem Primärkreislauf und dem Sekundärkreislauf handelt es sich vorzugsweise um jeweils geschlossene Kreisläufe, die untereinander nicht in fluidischer Verbindung stehen. Denkbar ist grundsätzlich aber auch, den Primärkreislauf und den Sekundärkreislauf offen zu gestalten, so dass diese beiden Kreisläufe über den Wärmespeicher Kältemedium austauschen können.

Um den Wirkungsgrad der Vorrichtung signifikant weiter zu erhöhen, wird in einer besonders vorteilhaften Ausführungsform der Erfindung die bei der Erwärmung bzw. Verdampfung entstehende Kälte nicht lediglich einfach entlang des Temperaturgradienten transportiert. Vielmehr wird hier die bei der Erwärmung bzw. Verdampfung entstehende Kälte zum Antrieb einer (thermisch betriebenen) Kältemaschine genutzt, die dann Ihrerseits, Kälte für die Innenraumkühlung erzeugt, zum Beispiel indem sie diese Kälte der Außenluft entzieht.

Als thermisch betriebene Kältemaschine wird allgemein eine Kältemaschine bezeichnet, bei der die für den Antrieb der Maschine benötigte Energie in Form von thermischer Energie (d.h. Wärme bzw. Kälte) zugeführt wird. Das Besondere der hier eingesetzten Kältemaschine liegt hierbei darin, dass die thermische Antriebsenergie (anders als z.B. bei einer von einem Verbrennungsmotor betriebenen Kältemaschine) nicht durch Verbrennung eines Energieträgers erzeugt wird, sondern dass für den Betrieb der Kältemaschine unmittelbar die bei der Erwärmung bzw. Verdampfung entstehende Kälte genutzt wird.

Eine besonders geeignete Ausführungsform einer solchen thermisch betriebenen Kältemaschine ist gebildet durch eine - an sich übliche - Kompressionskältemaschine, die antriebstechnisch mit einem Stirlingmotor gekoppelt ist. Der Stirlingmotor nutzt hierbei vorzugsweise den vergleichsweise hohen Temperaturunterschied des im Primärkreislauf zirkulierenden Kältemediums gegenüber der Außentemperatur.

Die von der Kältemaschine erzeugte Kälte kann direkt zur Innenraumkühlung eingesetzt werden. Bevorzugt ist der Kältemaschine und dem zu kühlenden Innenraum wiederum ein Kältespeicher, insbesondere Eisspeicher, zwischengeschaltet, wobei dieser Kältespeicher durch die Kältemaschine zur bedarfsgerechten Entnahme mit Kälte "geladen" wird.

Die besonders hohe Effizienz dieser Verfahrensvariante beruht insbesondere auf der Tatsache, dass antriebsseitig vorzugsweise eine sehr hohe Temperaturdifferenz ausgenutzt wird, um seitens der Kältemaschine (d.h. für die Raumkühlung) eine wesentlich geringere Temperaturdifferenz zu erzeugen. Bei dieser Kombination wird ein den Wert 1 wesentlich übersteigender Wirkungsgrad der Kältemaschine erzielt, so dass durch den Einsatz der Kältemaschine die Menge der zur Innenraumkühlung nutzbaren Kältemenge vervielfacht wird.

Grundsätzlich kann, insbesondere bei kleineren Anlagen, der vorstehend beschriebenen erste Wärmetauscher als einziges Mittel zur Erwärmung bzw. Verdampfung des Industriegases vorgesehen sein. Um die zu verdampfenden Gasmengen und die Nutzung der dabei anfallenden Verdampfungskälte flexibler handhaben zu können, ist in vorteilhafter Weiterentwicklung der Erfindung zusätzlich zu diesem ersten Wärmetauscher aber ein zweiter Wärmetauscher vorgesehen, in dem das Industriegas in herkömmlicher Weise durch thermische Wechselwirkung mit der Außenluft verdampft oder - soweit es schon in gasförmiger Phase vorliegt - bedarfsgerecht erwärmt wird. Dieser zweite Wärmetauscher kann dem ersten Wärmetauscher wahlweise nachgeschaltet oder parallelgeschaltet sein. In bevorzugter Ausführung der Erfindung sind der erste Wärmetauscher und der zweite Wärmetauscher bedarfsgerecht und stufenlos seriell und parallel schaltbar, indem der zweite Wärmetauscher dem ersten Wärmetauscher innerhalb eines Hauptstrangs der Gasleitung nachgeschaltet, über einen den ersten Wärmetauscher umgehenden Bypass-Strang der Gasleitung aber parallelgeschaltet ist.

Zusammenfassend besteht ein Kernaspekt der vorstehend beschriebenen Erfindung in der Verwendung der bei der Verdampfung eines kaltverflüssigten Industriegases entstehenden Kälte zur Gebäudeklimatisierung. Hierdurch werden die im Betrieb einer Klinik oder industriellen Anlage häufig als "Ausschuss" anfallenden Kälte- und Wärmemengen synergetisch genutzt, ohne dass diese Kälte- und Wärmemengen an die Umgebung abgegeben werden muss. Dies erlaubt einerseits eine signifikante Einsparung der unter gewöhnlichen Umständen für die Gebäudeklimatisierung aufzuwendenden (elektrischen) Energie. Andererseits werden durch die interne Energieverwertung negative Einflüsse auf die Umwelt verhindert oder zumindest reduziert.

In der bevorzugten Anwendungsform des Verfahrens und der zugehörigen Vorrichtung wird das verdampfte und ggf. erwärmte Industriegas einem zum Beispiel industriellen oder medizinischen Prozess zugeführt, in dem es verbraucht wird. Die Energieeffizienz des Verfahrens liegt dabei insbesondere in dem Umstand begründet, dass das Industriegas nicht lediglich für den Zweck der Innenraumkühlung verdampft und/oder erwärmt wird, sondern dass die Kälte, die bei der nötigen Verdampfung des zu verbrauchenden Industriegases ohnehin anfallen würde, synergetisch zur Innenraumkühlung eines Gebäudes genutzt wird.

Nachfolgend wird ein Ausführungsbeispiel der Erfindung anhand einer Zeichnung näher erläutert. Darin zeigen:
- Fig. 1: eine Vorrichtung zur Gebäudeklimatisierung unter Verwendung der bei der Verdampfung eines kaltverflüssigten Industriegases gewonnenen Kälte, und
- Fig. 2: eine zweite Ausführungsform der Vorrichtung.

Einander entsprechende Teile und Größen sind in allen Figuren stets mit gleichen Bezugszeichen versehen.

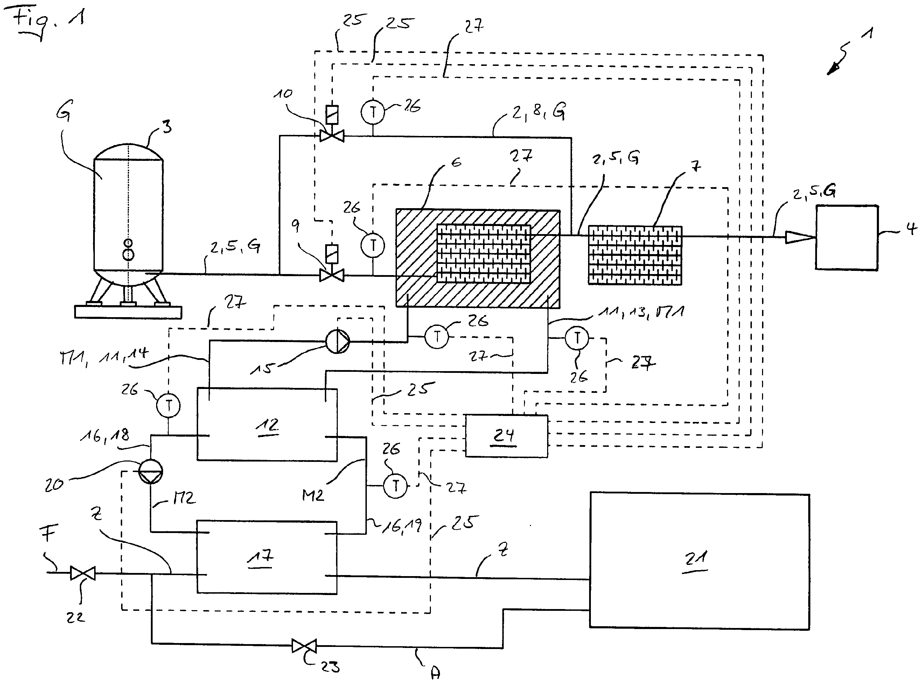

Die in Fig. 1 dargestellte Vorrichtung 1 umfasst eine Gasleitung 2, die ein Industriegas G führt. Die Gasleitung 2 verbindet hierbei einen Vorratstank 3, in dem das Industriegas G in kaltverflüssigter Form vorgehalten wird, mit einem Verbraucher 4, der dieses Industriegas G in gasförmiger Phase benötigt. Innerhalb eines Hauptstrangs 5 der Gasleitung 2 sind dem Vorratstank 3 einerseits und dem Verbraucher 4 andererseits ein erster Wärmetauscher 6 sowie ein zweiter Wärmetauscher 7 zwischengeschaltet, in denen das kaltverflüssigte Industriegas G verdampft wird.

Zusätzlich zu dem Hauptstrang 5 umfasst die Gasleitung 2 einen Bypass-Strang 8, in dem kaltverflüssigtes Industriegas G unter Umgehung des ersten Wärmetauschers 6 direkt dem zweiten Wärmetauscher 7 zugeleitet werden kann. Durch Magnetventile 9 und 10, die zueinander parallel in den Hauptstrang 5 bzw. den Bypass-Strang 8 der Gasleitung 2 geschaltet sind, können hierbei der Anteil des dem Vorratstank 3 entnommenen Industriegases G, der über den Hauptstrang 5 und somit den ersten Wärmetauscher 6 geleitet wird, und der Anteil des dem Vorratstank 3 entnommenen Industriegases G, der an dem ersten Wärmetauscher 6 vorbei über den Bypass-Strang 8 geleitet wird, eingestellt werden.

In dem Wärmetauscher 6 erfolgt die Verdampfung des verflüssigten Industriegases G durch thermischen Kontakt dieses Industriegases G mit einem flüssigen Kältemedium M1. Der Wärmetauscher 6 ist hierzu in einen das Kältemedium M1 führenden, geschlossenen Primärkreislauf 11 geschaltet, der andererseits mit einem Eisspeicher 12 wärmeübertragungstechnisch verbunden ist. Über einen Vorlauf 13 des Primärkreislaufes 11 wird hierbei kaltes Kältemedium M1 aus dem Wärmetauscher 6 abgezogen und dem Eisspeicher 12 zugeleitet. Über einen Rücklauf 14 des Primärkreislaufes 11 wird wärmeres Kältemedium M1 aus dem Eisspeicher 12 abgezogen und wiederum dem Wärmetauscher 6 zur erneuten Abkühlung zugeleitet. Die Zirkulation des Kältemediums M1 in dem Primärkreislauf 11 wird hierbei durch eine (hier beispielsweise in den Rücklauf 14 geschaltete) Umwälzpumpe 15 bewirkt. Die Umwälzpumpe 15 kann optional entfallen, wenn der Eisspeicher 12 räumlich unterhalb des Wärmetauschers 6 angeordnet ist, und der Primärkreislauf 11 derart dimensioniert sind, dass eine hinreichende Zirkulation des Kältemediums M1 bereits durch Konvektion gewährleistet ist.

Über einen ebenfalls geschlossenen Sekundärkreislauf 16, der ebenfalls ein flüssiges Kältemedium M2 führt, steht der Eisspeicher 12 in kälteübertragungstechnischer Verbindung mit einem Raumkühlungsaggregat 17. Über einen Vorlauf 18 des Sekundärkreislaufes 16 wird hierbei vergleichsweise kaltes Kältemedium M2 aus dem Eisspeicher 12 abgezogen und dem Raumkühlungsaggregat 17 zugeleitet. Über einen Rücklauf 19 des Sekundärkreislaufes 16 wird entsprechend wärmeres Kältemedium M2 aus dem Raumkühlungsaggregat 17 abgezogen und in den Eisspeicher 12 zurückgeleitet. Eine Zirkulation des Kältemediums M2 wird durch eine (hier im Vorlauf 18 angeordnete) Umwälzpumpe 20 bewirkt. Auch diese Umwälzpumpe 20 kann optional weggelassen werden, wenn die Kältemediumströmung bereits durch Konvektion gewährleistet ist.

Bei dem Raumkühlungsaggregat 17 handelt es sich in einer einfachen Ausführung der Vorrichtung 1 um einen Luftwärmetauscher, in dem das in dem Sekundärkreislauf 16 zirkulierende Kältemedium M2 einen Zuluftstrom Z für einen zu kühlenden Innenraum 21 eines Gebäudes kühlt.

Der dem Raumkühlungsaggregat 17 zugeführte Zuluftstrom Z setzt sich vorzugsweise zusammen aus einem Frischluftanteil F, der dem Raumkühlungsaggregat 17 von der Umgebung des Gebäudes zugeführt wird, sowie einem Abluftanteil A, der durch das Raumkühlungsaggregat 17 aus dem Innenraum 21 abgezogen und mit dem Frischluftanteil F vermischt wird. Das Volumenverhältnis des Frischluftanteils F und des Abluftanteils A kann durch Ventile 22 und 23 gesteuert werden, die schematisch in der Figur separat dargestellt sind, die in bevorzugter Ausführung der Vorrichtung 1 aber integrale Bestandteile des Raumkühlungsaggregats 17 sind.

Die aktiven Komponenten der Vorrichtung 1, nämlich insbesondere die Umwälzpumpen 15 und 20 sowie die Magnetventile 9 und 10, werden von einer zentralen Steuereinheit 24 über Steuerleitungen 25 angesteuert. Die vorzugsweise als sogenannte speicherprogrammierbare Steuerung ausgeführte Steuereinheit 24 nimmt die Ansteuerung der Umwälzpumpe 15, 20 und Magnetventile 9, 10 hierbei nach Maßgabe eines in ihr implementierten Steuerprogramms in Abhängigkeit der Gastemperaturen im Hauptstrang 5 und Nebenstrang 8 der Gasleitung 2, der Temperaturen des Kältemediums M1 im Vorlauf 13 und Rücklauf 14 des Primärkreislaufes 11 sowie der Temperaturen des Kältemediums M2 im Vorlauf 18 und Rücklauf 19 des Sekundärkreislaufes 16 vor. Die Steuereinheit 24 ist zur Erfassung dieser Temperaturen über Signalleitungen 27 mit entsprechenden Temperatursensoren 26 verbunden.

Bei dem Industriegas G handelt es sich beispielsweise um Stickstoff. Bei dem Verbraucher 4 handelt es sich beispielsweise um eine lebensmittelverarbeitende Industrieanlage, in der der Stickstoff als Schutzatmosphäre zum Zweck einer besseren Konservierung verwendet wird. Bei dem in dem Primärkreislauf 11 und Sekundärkreislauf 16 zirkulierenden Kältemedium M1 bzw. M2 handelt es sich vorzugsweise in beiden Fällen um (Kalt-)Sole mit einem Gefrierpunkt von z.B. -25°C.

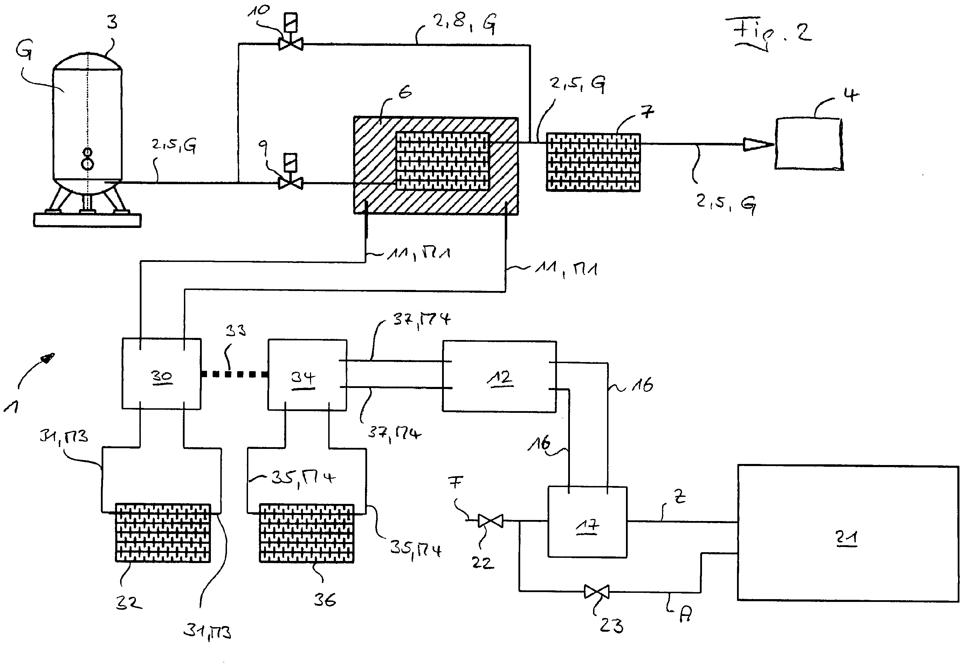

Bei der Ausführungsform der Vorrichtung 1 gemäß Fig. 2 ist der Primärkreislauf 11 nicht unmittelbar mit dem Eisspeicher 12 verbunden. Vielmehr ist der Primärkreislauf 11 hier mit dem kalten Zylinder bzw. Zylinderraum eines Stirlingmotors 30 verbunden. Der warme Zylinder bzw. Zylinderraum des Stirlingmotors 30 ist über einen weiteren Kreislauf 31, in dem ein weiteres Kältemedium M3 zirkuliert, mit einem Außenluftwärmetauscher 32 verbunden.

Der Stirlingmotor 30 ist über eine Welle 33 antriebstechnisch mit einer Kompressionskältemaschine 34 gekoppelt. Die Kompressionskältemaschine 34 ist einerseits über einen Kreislauf 35 mit einem Außenluftwärmetauscher 36 verbunden, der für die Kompressionskältemaschine 34 das warme Reservoir bildet. Die Kompressionskältemaschine 34 ist andererseits über einen weiteren Kreislauf 37 mit dem Eisspeicher 12 verbunden, der für die Kompressionskältemaschine 34 das kalte Reservoir bildet. Die Kreisläufe 35 und 37 sind vorzugsweise im Inneren der Kompressionskältemaschine 34 miteinander verbunden, und werden somit von einem gemeinsamen Kältemedium M4 durchströmt. Die Kreisläufe 35 und 37 können in alternativer Ausführung aber auch als separate, jeweils in sich geschlossene Kreisläufe ausgebildet sein.

Im Betrieb der Vorrichtung 1 wird unter Nutzung des Temperaturgradianten zwischen dem ersten Wärmetauscher 6 und dem Außenluftwärmetauscher 32 der Stirlingmotor 30 angetrieben, der über die Welle 33 wiederum die Kompressionskältemaschine 34 antreibt. Die Kompressionskältemaschine 34 bildet somit in Kombination mit dem Stirlingmotor 30 eine thermisch betriebene Kältemaschine. Der Kreislauf 37 bildet einen Zwischenkreislauf, über den der Eisspeicher 12 mit der von dieser Kältemaschine erzeugten Kälte geladen wird.

Als Kältemedium M3 und M4 wird jeweils wiederum bevorzugt Sole verwendet.

Soweit nicht abweichend beschrieben, entspricht das in Fig. 2 dargestellte Ausführungsbeispiel der Vorrichtung 1 dem Ausführungsbeispiel gemäß Fig. 1. Insbesondere umfasst das zweite Ausführungsbeispiel ebenfalls eine Steuereinheit, Signalleitungen, Sensoren, Signalleitungen und - sofern erforderlich - Umwälzpumpen in den einzelnen Kreisläufen. In Fig. 2 wurden diese Teile lediglich aus Gründen der besseren Übersichtlichkeit weggelassen.

### Bezugszeichenliste

- 1: Vorrichtung
- 2: Gasleitung
- 3: Vorratstank
- 4: Verbraucher
- 5: Hauptstrang
- 6: (erster) Wärmetauscher
- 7: (zweiter) Wärmetauscher
- 8: Bypass-Strang
- 9: Magnetventil
- 10: Magnetventil
- 11: Primärkreislauf
- 12: Eisspeicher
- 13: Vorlauf
- 14: Rücklauf
- 15: Umwälzpumpe
- 16: Sekundärkreislauf
- 17: Raumkühlungsaggregat
- 18: Vorlauf
- 19: Rücklauf
- 20: Umwälzpumpe
- 21: Innenraum
- 22: Ventil
- 23: Ventil
- 24: Steuereinheit
- 25: Temperatursensor
- 26: Signalleitung
- 30: Stirlingmotor
- 31: Kreislauf
- 32: Außenluftwärmetauscher
- 33: Welle
- 34: Kompressionskältemaschine

- 35: Kreislauf
- 36: Außenwärmetauscher
- 37: Kreislauf

- G: Industriegas
- M1: Kältemedium
- M2: Kältemedium
- M3: Kältemedium
- M4: Kältemedium
- Z: Zuluftstrom
- F: Frischluftanteil
- A: Abluftanteil

## Patentansprüche

1. Verfahren zur Gebäudeklimatisierung,
bei welchem ein kaltverflüssigtes Industriegas (G) verdampft und/oder erwärmt wird, und bei welchem die bei der Erwärmung bzw. Verdampfung entstehende Kälte mittelbar oder unmittelbar zur Innenraumkühlung eines Gebäudes genutzt wird.

2. Verfahren nach Anspruch 1,
bei welchem durch die bei der Erwärmung bzw. Verdampfung entstehende Kälte in einem ersten Wärmetauscher (6) ein Kältemedium (M1) gekühlt wird, welches wiederum mittelbar oder unmittelbar zur Innenraumkühlung des Gebäudes genutzt wird.

3. Verfahren nach Anspruch 1 oder 2,
bei welchem die bei der Erwärmung bzw. Verdampfung entstehende Kälte zum Antrieb einer Kältemaschine (30,34) genutzt wird, mittels der wiederum Kälte für die Innenraumkühlung des Gebäudes erzeugt wird.

4. Verfahren nach einem der Ansprüche 1 bis 3,
bei welchem mittels der bei der Erwärmung bzw. Verdampfung entstehenden Kälte ein Kältespeicher (12) beladen wird, und bei welchem die in dem Kältespeicher (12) gespeicherte Kälte zur Innenraumkühlung des Gebäudes genutzt wird.

5. Verfahren nach Anspruch 4,
bei welchem ein Kältemedium (M2) in einem Sekundärkreislauf (16) zwischen dem Kältespeicher (12) und einem Luftwärmetauscher geführt wird.

6. Vorrichtung (1) zur Gebäudeklimatisierung,
mit einem ersten Wärmetauscher (6) zur Verdampfung und/oder Erwärmung eines kaltverflüssigten Industriegases (G) durch thermische Wechselwirkung mit einem Kältemedium (M1), wobei der erste Wärmetauscher (6) einerseits in eine das Industriegas (G) führende Gasleitung (2), und andererseits in einen das Kältemedium (M1) führenden Primärkreislauf (11) geschaltet ist, der den Wärmetauscher (6) kälteübertragungstechnisch mit Mitteln (12,17) zur Innenraumkühlung eines Gebäudes verbindet.

7. Vorrichtung (1) nach Anspruch 6,
wobei die Mittel zur Innenraumkühlung einen Luftwärmetauscher (17) umfassen.

8. Vorrichtung (1) nach Anspruch 6 oder 7,
wobei die Mittel zur Innenraumkühlung einen Kältespeicher (12) umfassen.

9. Vorrichtung (1) nach den Ansprüchen 7 und 8,
wobei der Kältespeicher (12) unmittelbar in den Primärkreislauf (11) geschaltet ist, und wobei der Luftwärmetauscher über einen ein Kältemedium (M2) führenden Sekundärkreislauf (16) wärmeübertragungstechnisch mit dem Kältespeicher (12) verbunden sind.

10. Vorrichtung (1) nach einem der Ansprüche 6 bis 9,
mit einer thermisch betriebenen Kältemaschine (30,34), die antriebsseitig in den Primärkreislauf (11) geschaltet ist, und die dazu ausgebildet ist, ein in einem Zwischenkreislauf (35,37) zirkulierendes Kältemedium (M4) zur Innenraumkühlung eines Gebäudes abzukühlen.

11. Vorrichtung (1) nach Anspruch 10,
wobei die Kältemaschine durch eine Kompressionskältemaschine (34) und einen dieser antriebstechnisch vorgeschaltetem Stirlingmotor (30) gebildet ist.

12. Vorrichtung (1) nach einem der Ansprüche 6 bis 11,
mit einem zweiten Wärmetauscher (7) zur Verdampfung und/oder Erwärmung des Industriegases (G) durch thermische Wechselwirkung mit der Außenluft, wobei der zweite Wärmetauscher (7) dem ersten Wärmetauscher (6) nachgeschaltet und/oder parallelgeschaltet ist.

13. Verwendung der bei einer Verdampfung und/oder Erwärmung eines kaltverflüssigten Industriegases (G) entstehenden Kälte zur Gebäudeklimatisierung.
